**Europäisches Patentamt**

**European Patent Office**

**Office européen des brevets**

(19)

(11) Publication number : **0 277 129 B1**

# EUROPEAN PATENT SPECIFICATION

(12)

(45) Date of publication of patent specification :
**11.03.92 Bulletin 92/11**

(51) Int. Cl.⁵ : **A01F 29/04, A01F 29/12**

(21) Application number : **86905993.1**

(22) Date of filing : **26.09.86**

(86) International application number :
**PCT/SE86/00431**

(87) International publication number :
**WO 87/01903 09.04.87 Gazette 87/08**

(54) **A DEVICE FOR CHOPPING STRAW.**

(30) Priority : **30.09.85 SE 8504508**

(43) Date of publication of application :
**10.08.88 Bulletin 88/32**

(45) Publication of the grant of the patent :
**11.03.92 Bulletin 92/11**

(84) Designated Contracting States :
**AT BE CH DE FR GB IT LI NL**

(56) References cited :
**AU-B- 471 587**
**FR-A- 1 055 469**
**FR-A- 1 141 447**

(56) References cited :
**GB-A- 1 060 179**
**GB-A- 2 116 834**
**SE-B- 368 657**
**US-A- 4 403 743**

(73) Proprietor : **Bender, Arne**
**Assarsgarden, Larv**
**S-535 00 Kvänum (SE)**

(72) Inventor : **Bender, Arne**
**Assarsgarden, Larv**
**S-535 00 Kvänum (SE)**

(74) Representative : **Roth, Ernst Adolf Michael et al**
**GÖTEBORGS PATENTBYRA AB Box 5005**
**S-402 21 Göteborg (SE)**

## Description

The present invention refers to a device for chopping straw of the type that comprises a rotor located in an apparatus housing having openings defining a straw inlet and a straw outlet respectively, said rotor having a plurality of knife arms projecting radially therefrom, whereby radially outer portions thereof upon rotation of the rotor pass between a plurality of counter knives arranged in a row and attached to a knife beam, said knife arms and counter knives being made of flat bars having two axially oppositely facing side surfaces and two laterally opposite long edges, each of said knife arms presents one of said long edges as leading edge and the other as trailing edge when rotated between said counter knives, said knife arms being attached to the rotor in a staggered pattern such that the knife arms act as fan blades guiding the air stream with chopped straw leaving the straw outlet of the apparatus housing, by the fact that each of said knife arms has its leading edge at least along its active part bevelled in an oblique sharpening plane from one side surface.

Document SE-B-403.552 and DE-A-2 801 827 describe a device of the above mentioned type, where every knife arm presents a double cutting surface along both long sides. A knife which has received a damage on the cutting edge can be used again by turning the other edge to the active position. The production cost for a knife of this type is relatively high due to the number of sharpening steps needed.

Tests have been carried out to improve the cutting result of the straw chopper by arranging the knives closer to each other. This has not given the desired effect but instead resulted in an increased power consumption.

Document FR-A-1141447 refers to a device for chopping feed stuff such as straw, vegetables etc. for cattle. The device comprises a rotor with knife arms, which when rotated pass between counter knives in a knife beam. There is no intention to provide a spreading of the chopped substance on the ground.

An object of the invention is to provide a device of the above mentioned type, which presents an improved cutting result in comparison with previous devices and which also simplifies and cheapens the production. Another object is to provide a device, which directs the air stream with the chopped straw particles in a desired direction and spreading pattern. This has been accomplished by the fact that the knife arms are swingingly arranged in pairs about the same pivot axle with their sharpened egde in an alternating configuration, with their bevelled surfaces directed away from or towards each other, in order to control the spreading direction and spreading width of the chopped straw behind the straw outlet.

Thus by variations of the placement of the knife arms in the rotor a straight backwards, a diverging, a converging or an obliquely backwards directed air stream can be provided.

The invention will now be more closely described with reference to the drawings, which show some embodiments.

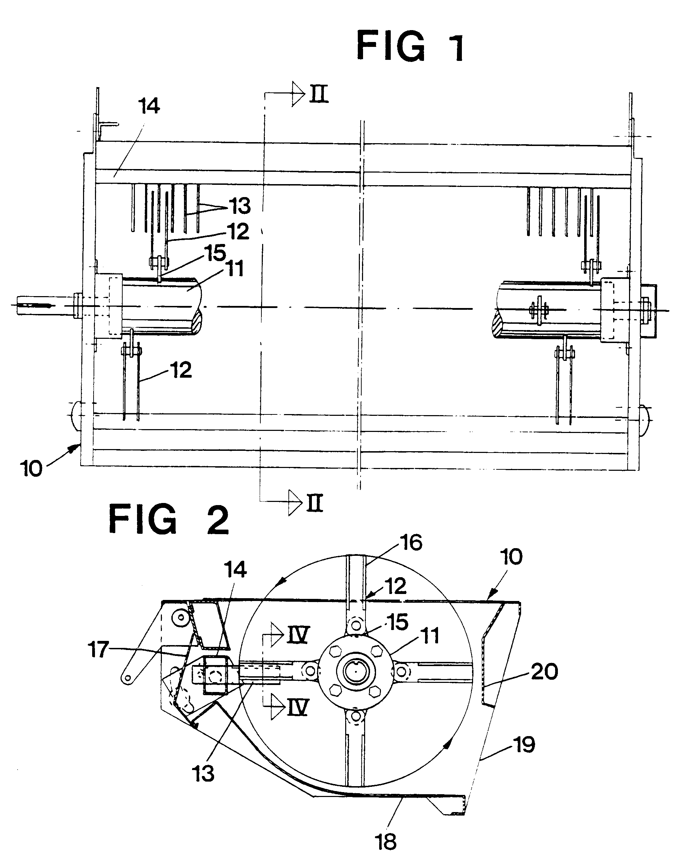

Fig. 1 is an axial section of an embodiment of the device according to the invention.

Fig. 2 is a section through the line II-II in fig. 1.

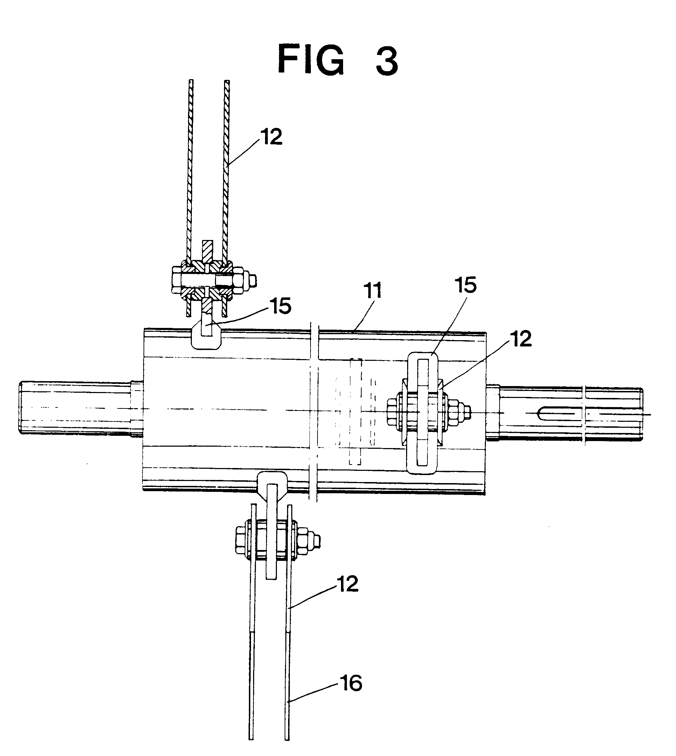

Fig. 3 shows, on a larger scale, an axial section through the knife-equipped rotor.

Fig. 4 a-c shows schematical cross sections through the knife arms in three different relative positions.

Fig. 5 and 6 show, in perspective and cross section, two different embodiments of the knife arms.

The straw chopper consists of an apparatus housing 10, in the end plates of which a knife rotor 11 is mounted, which is supplied with radially projecting knife arms 12. The knife arms 12 consist of pivotally mounted knives arranged in pairs and attached to the rotor 11 in a staggered pattern. At the rotation of the rotor the knife arms 12 pass between counter knives 13, which are fixed to a knife beam 14. The knife beam 14 is angularly displaceably attached to the apparatus housing 10, so that the length of the part of the counter knives that project between the knife arms 12 is adjustable, so that the straw chopper can be adapted to different crops and feed. The adjustment and fixation of the knife beam 14 in different positions relative to the apparatus housing 10 is done by means of a lever (not shown).

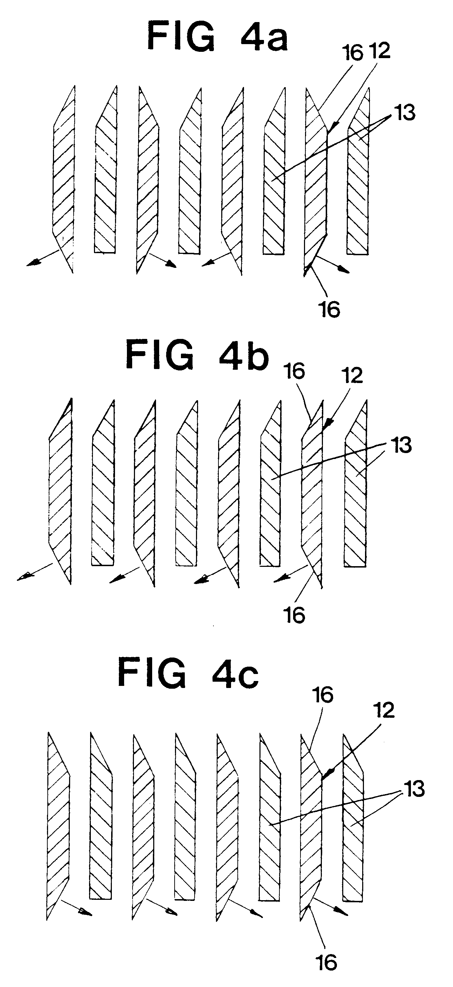

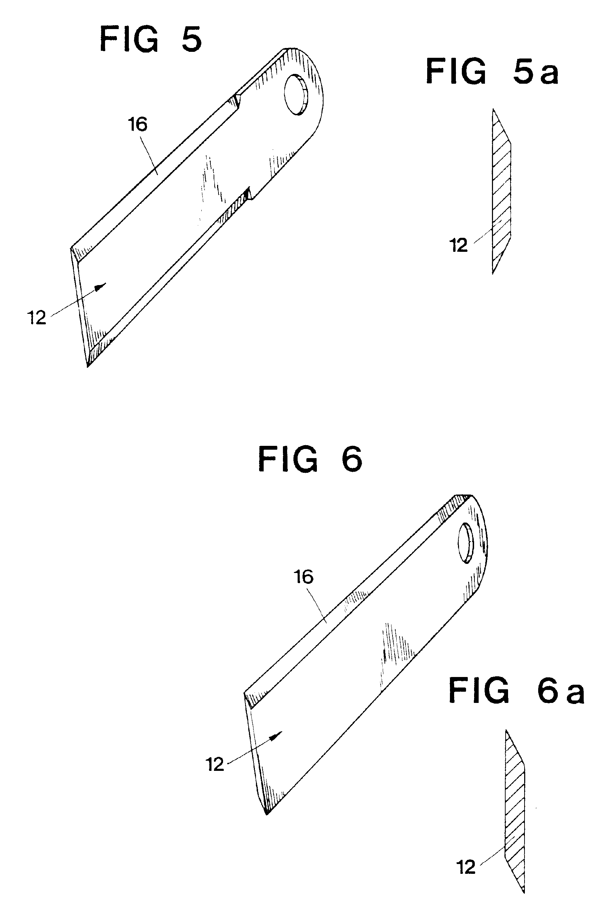

The knife arms 12 consist of flat bars and present along both their long sides an edge 16 provided with single sided sharpening of the flat bar. The edge 16 can, as shown in the figures, terminate just in front of the attachment to a holder 15 or extend along the whole lenght of the knife arms 12. The sharpening of the edges of the knife arms 12 can either be performed on the same side surface of the flat bar, as in fig. 4 a-c and fig 5 and 5a or on opposite side surfaces as in fig. 6 and 6a.

The counter knives 13 are preferably sharpened in a corresponding way as the knife arms 12 or only along one of the long sides.

Through the single sided sharpening of the edges 16 there is obtained a longer cutting surface in comparison with a double sided sharpened edge.

The advantages which have been established after a number of practical experiments with the sharpened single sided knife arms 12 according to the invention compared with the previously used double sided sharpened knife arms are as follows:

a) a clear improvement of the cutting result, more precisely about 50% increase of the communication of the straw's final size cross- as well as lenghtwise. It must be noted that this is a remarkable result,

b) decreased power consumption.

c) about 50% lowered production costs for the single-sided sharpened knives.

d) decreased wear and tear of the edge.

An additional advantage of the single sided sharpened knife arms 12 is that they, to a certain extent, will function as fan blades and provide a direction of the air stream containing the comminuted straw particles, so that one can guide this air stream through the mutual placement of the knife arms 12.

By placing the knife arms 12 as shown in fig. 4a i.e. every other with the edge 16 turned to the left and every other with the edge turned to the right, there is obtained compensation of the knife arms guidance of the air stream, so that the stream will be directed essentially straight backwards. By directing the edges 16 either to the left or to the right, as seen in fig. 4b and 4c, a left- respectively right- directed air stream is obtained. A diverging air stream can be obtained by placing half of the number of knife arms 12 edges in a right position and the other half in a left postition, and in a corresponding way a converging air stream can be achieved.

The apparatus housing 10 in which the rotor 11 and the knife beam 14 are placed has been given a shape to optimize the cutting result. Therefore, straw and air are jointly taken in through the upper inlet of the apparatus housing and a front plate 17 prevents the air from being sucked in at the front of the apparatus housing 10. Thereby an even air stream through the apparatus housing is obtained and a whirl formation causing a stop up of the straw flow is avoided.

The bottom plate 18 is extended backwards so that the outgoing airstream is directed backwards before it leaves the apparatus housing 10 through the outlet 19. Situated above the outlet there is a rear guide plate 20 which prevents the airstream to follow the rotor 11 back, but forces it out through the outlet 19. The dispersion effect is therefore improved.

The invention is certainly not limited to the shown embodiments but a number of variations are possible within the scope of the following claims.

## Claims

1. A device for chopping straw of the type that comprises a rotor (11) located in an apparatus housing (10) having openings defining a straw inlet and a straw outlet respectively, said rotor having a plurality of knife arms (12) projecting radially therefrom, whereby radially outer portions thereof upon rotation of the rotor pass between a plurality of counter knives (13) arranged in a row and attached to a knife beam (14), said knife arms and counter knives being made of flat bars having two axially oppositely facing side surfaces and two laterally opposite long edges, each of said knife arms (12) presents one of said long edges as leading edge and the other as trailing edge when rotated between said counter knives (13), said knife arms (12) being attached to the rotor (11) in a staggered pattern such that the knife arms act as fan blades guiding the air stream with chopped straw leaving the straw outlet (19) of the apparatus housing (10), by the fact that each of said knife arms (12) has its leading edge at least along its active part bevelled in an oblique sharpening plane from one side surface, **characterized in,** that the knife arms (12) are swingingly arranged in pairs about the same pivot axle with their sharpened edge in an alternating configuration, with their bevelled surfaces directed away from or towards each other, in order to control the spreading direction and spreading width of the chopped straw behind the straw outlet.

2. A device according to claim 1, **characterized in,** that the knife arms (12) are arranged on the rotor (11) with their bevelled surfaces in groups directed in the same direction.

## Patentansprüche

1. Eine Vorrichtung zum Häckseln von Stroh der Bauart, welche einen Rotor (11) aufweist, der in einem Gehäuse (10) der Vorrichtung angeordnet ist, welches Öffnungen hat, welche einen Stroheinlaß bzw. einen Strohauslaß definieren, wobei der Rotor eine Mehrzahl von Messerarmen (12) aufweist, welche radial hiervon vorstehen, wobei die radial äußeren Bereiche hiervon bei Drehung des Rotors zwischen eine Mehrzahl von Gegenmesser (13) passen, welche in einer Reihe angeordnet sind und an einem Messerbalken (14) befestigt sind, wobei die Messerarme und Gegenmesser aus flachen Schienen gefertigt sind mit zwei axial einander gegenüberliegenden Seitenoberflächen und zwei lateral entgegengesetzten Längskanten, wobei jeder der Messerarme (12) eine seiner Längskanten als Vorderkante und die andere als Hinterkante hat, wenn eine Drehung zwischen den Gegenmessern (13) erfolgt, wobei die Messerarme (12) an dem Rotor (11) in einer versetzten Art und Weise derart angeordnet sind, daß die Messerarme als Gebläseschaufeln wirken, welche den Luftstrom mit dem gehäckselten Stroh führen, so daß dieses den Strohauslaß (19) am Gehäuse (10) der Vorrichtung verläßt, wobei die Tatsache vorliegt, daß jeder der Messerarme (12) an seiner Vorderkante wenigstens entlang des aktiven Bereiches von einer seitlichen Oberfläche her in einer schrägen Schärfungsebene geneigt ist, dadurch gekennzeichnet, daß die Messerarme (12) schwingend paarweise um die gleiche Schwenkachse angeordnet sind, wobei die geschärfte Kante in einer alternierenden Konfiguration vorliegt, wobei die abgeschrägten Oberflächen voneinander weg oder zueinander hin gerichtet sind, um die Verteilrichtung und die Ausbreitungsbreite des gehäckselten Strohs hinterhalb des Strohauslaßes zu steuern.

2. Eine Vorrichtung nach Anspruch 1,
dadurch gekennzeichnet,
das die Messerarme (12) an dem Rotor (11) gruppenweise angeordnet sind, wobei die abgeschrägten Oberflächen in die gleiche Richtung weisen.

**Revendications**

1. Dispositif de hachage de paille du type qui comprend un rotor (11) placé dans un carter de machine (10) comportant des ouvertures qui définissent une entrée de paille et une sortie de paille respectivement, ledit rotor portant une pluralité de couteaux (12) qui s'étendent dans la direction radiale du rotor de sorte que des parties radialement extérieures de ces couteaux passent, lors de la rotation du rotor, entre une pluralité de contre-lames (13) agencées en une ligne et fixées à une poutrelle porte-lames (14), lesdits couteaux et lesdites contre-lames étant constitués de barres plates qui ont deux surfaces latérales tournées dans des directions axialement opposées et deux longues arêtes latéralement opposées, chacun desdits couteaux (12) présentant une desdites longues arêtes comme arête d'attaque et l'autre comme arête arrière lorsqu'il tourne entre lesdites contre-lames (13), lesdits couteaux (12) étant attachés au rotor (11) suivant une configuration décalée de sorte que les couteaux agissent comme des pales de ventilateur pour guider le flux d'air et de paille hachée vers la sortie de paille ( 19) du carter de machine (10),du fait que l'arête d'attaque de chaque couteau (12)est biseautée, au moins le long de sa partie active, dans un plan d'affûtage oblique à partir d'une surface latérale,
caractérisé en ce que
les couteaux (12) sont montés de façon oscillante en paires autour du même axe de pivotement et avec leur arête affûtée suivant une configuration alternée, leurs surfaces biseautées étant dirigées à l'opposé l'une de l'autre ou l'une vers l'autre, afin de fixer la direction d'étalement et la largeur de la paille hachée, derrière la sortie de paille.

2. Dispositif suivant la revendication 1,
caractérisé en ce que
les couteaux (12) sont disposés sur le rotor (11) de sorte que leurs surfaces biseautées constituent des groupes dirigés dans le même sens.

# FIG 1

# FIG 2

# FIG 3

# FIG 4a

# FIG 4b

# FIG 4c

FIG 5

FIG 5a

16

12

12

FIG 6

16

12

FIG 6a

12